# EUROPÄISCHE PATENTSCHRIFT

(11) **EP 2 457 003 B1**
(45) Veröffentlichungstag und Bekanntmachung des Hinweises auf die Patenterteilung: **01.04.2015**
(21) Anmeldenummer: 10737831.7
(22) Anmeldetag: 15.07.2010
(51) Int. Cl.: F16J 15/34, F16L 27/087, F16J 15/40

(54) **DICHTUNGSANORDNUNG ALS ÖLDREHDURCHFÜHRUNG**
SEALING ARRANGEMENT IN A ROTATING UNION
ÉTANCHÉITÉ D'UN PASSAGE D'HUILE EN ROTATION

(30) Priorität: 23.07.2009 DE 202009010047 U
(43) Veröffentlichungstag der Anmeldung: 30.05.2012
(73) Patentinhaber: GAPI Technische Produkte GmbH, 51503 Rösrath (DE)
(72) Erfinder: MELLER, Dieter, 53347 Alfter (DE)
(74) Vertreter: Lippert, Stachow & Partner
(86) Internationale Anmeldenummer: PCT/EP2010/060230
(87) Internationale Veröffentlichungsnummer: WO 2011/009799

(56) Entgegenhaltungen:
- DE-A1- 19 502 079
- US-A- 2 310 309
- US-A- 3 285 614
- US-A- 3 333 856

## Beschreibung

Die Erfindung betrifft eine Dichtungsanordnung zur Abdichtung eines Öldruckraumes zwischen einer rotierbaren Welle und einer Wellenaufnahme, auch Öldrehdurchführung genannt, wobei die Öldrehdurchführung einen radialen Öldurchlass aufweist, um einen Ölführungskanal von Welle und/ oder Aufnahme fluiddurchlässig mit dem Öldruckraum zu verbinden, und mit einer Dichtungsanordnung, welche den Öldruckraum beidseitig in Axialrichtung der Welle abdichtet. Gattungsgemäße Öldrehdurchführungen werden vielfältig eingesetzt, zumeist bei Anwendung bei einer rotierenden Hohlwelle, deren Hohlraum einen Öldurchführungskanal ausbildet. Der Zwischenraum zwischen der Welle und der dieser zugeordneten Aufnahme ist hierbei mit Öl gefüllt, welches zumeist druckbeaufschlagt ist. Die die Welle umgebende Aufnahme kann gegebenenfalls ihrerseits mit dem ölbeaufschlagten Druckraum zwischen Welle und Aufnahme fluiddurchlässig verbunden sein, allgemein kann die Aufnahme ihrerseits als Hohlwelle ausgeführt sein. Die Ölführungen von Welle und Aufnahme können hierbei über den Öldruckraum fluidführend verbunden sein. Der Öldruckraum zwischen Welle und Aufnahme wird axial nach außen durch zwei beabstandete Dichtringe abgedichtet, die somit beidseitig der in den Öldruckraum mündenden Ölzuführungen von Welle und/oder Aufnahme angeordnet sind. Derartige Öldrehdurchführungen können bei Getrieben aber auch bei anderen Anwendungen eingesetzt werden.

Die Öldrehdurchführung muss hohen Dichtigkeitsanforderungen genügen, auch bei hohen Relativdrehzahlen der Welle zu der Aufnahme, hohen Drucken bzw. Druckschwankungen und hohen Temperaturen bzw. Temperaturschwankungen. Bisher werden bei derartigen Öldrehdurchführungen zumeist Rechteckringe aus Stahl oder Kunststoff als Dichtringe eingesetzt, da aufgrund der hohen Betriebstemperaturen ansonsten übliche Lippendichtungen ausscheiden. Die Rechteckringe werden zur Abdichtung gegenüber den jeweiligen Bauteilen hydraulisch an diese angepresst. Die axiale (seitliche) Begrenzungsfläche des Dichtringes wird dann mit hydraulischem Druck gegen die Nutflanke des den Dichtring aufnehmenden Bauteils abgestützt. Hieraus resultieren bei den hohen Drehzahlen, welchen die mit derartigen Öldrehdurchführungen eingesetzten Wellen zumeist ausgesetzt sind, beträchtliche Reibungskräfte an dem Dichtring, die an der Reibfläche bzw. der Dichtfläche des Dichtringes zu beträchtlichen Temperaturerhöhungen. Um eine Überhitzung der jeweiligen Bauteile an den Reibflächen zu vermeiden ist eine Kühlung mit Leckageöl notwendig. Dies bedingt jedoch, dass bei sehr hohen Öldrücken und damit bei hohen Anpresskräften des Dichtringes an die Dichtfläche des jeweiligen Bauteils, und hohen Relativgeschwindigkeiten eine relativ große Kühlölmenge als Leckagestrom notwendig ist, so dass die eigentliche Funktion der Dichtungsanordnung deutlich beeinträchtigt wird. Da in einer Maschine wie beispielsweise einem Getriebe eine Vielzahl von Öldrehdurchführungen vorliegen können, führen die Reibungsverluste an der jeweiligen Öldrehdurchführung insgesamt auch zu signifikanten Leistungsverlusten der jeweiligen Maschine, beispielsweise eines Motors mit Getriebe.

Die hohen relativen Rotationsgeschwindigkeiten des Dichtringes gegenüber den an diesem abdichtend anliegenden Bauteilen sind im Hinblick auf die Dichtigkeit der Öldrehdurchführung besonders kritisch, so dass zu hohe Relativgeschwindigkeiten zu vermeiden sind und andererseits durch die Relativgeschwindigkeiten wesentlich die Gestaltung der Dichtringaufnahmenut, der Oberflächengüte der Dichtflächen, die Materialqualität und Härte der Bauteile im Bereich der Dichtflächen beeinflusst wird. So ist es oftmals erforderlich, im Bereich der Dichtflächen gehärtete Materialien einzusetzen. Werden beispielsweise Wellen oder Aufnahmen aus Aluminium eingesetzt, so müssen die jeweiligen Dichtflächen zumeist aus gehärtetem, beispielsweise eloxiertem, Aluminium bestehen, um eine ausreichende Dauerbeständigkeit zu haben. Weiterhin müssen die Nuten, an deren Nutflanken der Dichtring abdichtend anlegbar ist, zumeist relativ klein ausgebildet werden, wobei die Nutflanken zumeist nur schwer zugänglich und daher dann auch aufwendig zu bearbeiten sind. Eine Überprüfung der Fertigungsqualität der Dichtflächen ist dann zumeist auch schwierig.

Weiterhin sollen derartige Öldrehdurchführungen ein gutes Ansprechverhalten zeigen, d.h. bei sich erhöhendem Öldruck soll die Ölleckage möglichst frühzeitig auf ein Minimum begrenzt werden. Dies ist bei herkömmlichen Öldrehdurchführungen nur begrenzt gegeben.

Eine Dichtungsanordnung, geeignet zur Abdichtung eines Öldruckraumes zwischen einer rotierbaren Welle und einer Wellenaufnahme, gemäss dem Oberbegriff des Anspruchs 1 ist aus dem US 3285614 A bekannt.

Der Erfindung liegt die Aufgabe zugrunde, eine Dichtungsanordnung, auch Öldrehdurchführung genannt, bereit zu stellen, welche baulich einfach ausgeführt ist. Die Aufgabe wird durch eine Dichtungsanordnung nach Anspruch 1 gelöst.

Unter "fluiddicht" sei hier verstanden, dass die jeweilige Verbindung unter den Betriebsbedingungen öldicht ist oder noch eine Leckage zulässt, die die Funktionsfähigkeit der Öldrehdurchführung oder der zugeordneten Vorrichtung zumindest im Wesentlichen nicht beeinträchtigt.

Dadurch, dass bei der Verwendung der Dichtungsanordnung der Dichtringträger und gegebenenfalls auch der Passkörper drehfest auf der Welle aufsitzen bzw. in der Aufnahme eingepasst sind, werden rotatorische Relativbewegungen zwischen den jeweils aneinander befestigten Bauteilen vermieden oder verringert. Hierdurch werden Reibungsverluste innerhalb der Öldrehdurchführung vermieden. Durch die drehfeste Verbindung von Dichtringträger und gegebenenfalls Passkörper an den jeweiligen Bauteilen wird somit gegebenenfalls bis auf einen tolerablen Schlupf des Passkörpers zu dem diesen haltenden Bauteil die gesamte relative rotatorische Bewegung der Dichtanordnung von den Dichtringen aufgenommen. Ein tolerabler Schlupf beeinträchtigt vorzugsweise die fluiddichte Verbindung des Passkörpers mit dem Bauteil nicht oder nicht in einem Ausmaß, welches die Funktionsfähigkeit der zugeordneten Maschine oder Vorrichtung beeinträchtigen würde. Das Drehdurchführungssystem ist hierdurch zudem einfach zu montieren und kann robust ausgebildet werden. Weiterhin kann hierdurch die Dichtringgeometrie besonders einfach und flexibel an die jeweiligen Erfordernisse angepasst werden. Der Dichtringträger kann hierbei auf eine glatte Welle aufgezogen und/ oder der Passkörper in eine glatte Aufnahme eingepasst werden. Kosten für aufwendig herzustellende Nuten an den jeweiligen Bauteilen entfallen hierdurch und die Montage reduziert sich auf die drehfeste Anordnung von Dichtringträger bzw. Passkörper an den jeweils korrespondieren Bauteilen. Weiterhin werden hierdurch Verschleiß und innere Reibungsverluste deutlich vermindert.

Vorzugsweise ist der Dichtringträger unmittelbar an dem jeweiligen Bauteil von Welle und Aufnahme drehfest befestigbar und fluiddicht mit diesem verbindbar. Vorzugsweise ist der Passkörper unmittelbar an dem jeweiligen Bauteil von Welle und Aufnahme befestigbar und fluiddicht mit diesem verbindbar. Allgemein kann die Verbindung des Passkörpers mit dem genannten jeweiligen Bauteil drehfest erfolgen, oder vorzugsweise mit einer Klemmkraft, welche geringer als die Klemmkraft des Dichtringträgers gegenüber dessen Befestigungsteil (Welle oder Aufnahme) ist. Drückt somit der Dichtringträger in Axialrichtung mittelbar oder unmittelbar auf den Passkörper, beispielsweise aufgrund einer Axialbewegung der Welle, so kann der Passkörper gegenüber seinem Befestigungsteil (z. B. der Aufnahme) axial verschoben werden und dieser Bewegung folgen, vorzugsweise unter währender fluiddichter Anlage des Passkörpers an seinem Befestigungsteil.

Die erfindungsgemäße Dichtungsanordnung, Öldrehdurchführung, kann derart ausgebildet sein, dass diese als bauliche Einheit bestehend aus Dichtringträger, Passkörper und den beiden zwischen den beiden Bauteilen angeordneten Dichtringen auf die Welle und/oder in die Aufnahme eingeschoben und drehfest an der Welle und/oder in der Aufnahme festgelegt werden können. Hierzu kann die Öldrehdurchführung als Bauteilgruppe in den Zwischenraum zwischen Welle und Aufnahme eingeschoben werden, um diese zu montieren. Gegebenenfalls kann auch zunächst die Öldrehdurchführung auf die Welle oder in die Aufnahme eingeschoben werden, so dass dann in einem weiteren Arbeitsschritt das jeweils andere Bauteil von Welle und Aufnahme an der Öldrehdurchführung befestigt wird. Die Montage der Öldrehdurchführung ist hierdurch besonders einfach. Die Öldrehdurchführung kann derart ausgebildet sein, dass durch das axiale Aufschieben des Dichtringträgers auf die Welle und/ oder des Passkörpers in die Aufnahme diese jeweils unabhängig voneinander auf den jeweils korrespondieren Bauteilen fluiddicht festgelegt werden. Die fluiddichte Festlegung wird bei üblichem bestimmungsgemäßen Betrieb der die Öldrehdurchführung umfassenden Vorrichtung beibehalten.

Der Dichtringträger kann verdrehfest, vorzugsweise im Klemmsitz, an seinem Befestigungsteil (Aufnahme oder vorzugsweise Welle) festgelegt werden. Der Passkörper kann im Klemmsitz an seinem Befestigungsteil (z.B. Aufnahme) festgelegt werden, wodurch die Klemmkraft vorzugsweise niedriger als die des Dichtringträgers an seinem Befestigungsteil ist, so dass der Passkörper bei Axialverschiebungen des Dichtringträgers zusammen mit diesem axial verschiebbar ist, gegebenenfalls kann auch eine zumindest im Wesentlichen verdrehfeste Klemmung vorliegen.

Der Klemmsitz ist jeweils vorzugsweise durch das Auf-/Einschieben von Dichtringträger oder Passkörper auf das korrespondierende Bauteil erzeugbar, vorzugsweise ausschließlich hierdurch, ggf. auch alternativ oder zusätzlich durch radiale Druckausübung auf den Dichtringträger oder den Passkörper. Vorzugsweise sind Dichtringträger und/oder Passkörper unmittelbar klemmend auf der Welle befestigt. Vorzugsweise sind Dichtringträger und/oder Passkörper ausschließlich durch eine Klemmwirkung auf der Welle befestigt. Der Klemmsitz ist vorzugsweise derart ausgebildet, dass durch diesen zugleich eine fuid- bzw. öldichte Verbindung von Dichtringträger und/ oder Passkörper mit dem jeweils korrespondierenden Bauteil von Welle und Aufnahme erzeugt wird. Vorzugsweise sind zur Befestigung und/oder zur Fluidabdichtung von Dichtringträger und/oder Passkörper gegenüber den jeweils korrespondierenden Bauteilen von Welle und Aufnahme keine weiteren Bauelemente wie Halteringe, Dichtungselemente usw. erforderlich.

Gegebenenfalls kann zwischen dem Passkörper und dem Bauteil, an welchem dieser befestigt ist (vorzugsweise der Aufnahme) zumindest unter bestimmten Betriebsbedingungen ein geringer Schlupf bestehen, so dass die Relativgeschwindigkeit zwischen Dichtringträger und Passkörper zueinander dann geringer ist als die von Welle und Aufnahme zueinander. Gegebenenfalls kann somit auch eine "schwimmende Lagerung" des Passkörpers gegeben sein, jeweils unter der Voraussetzung, dass der Passkörper zumindest im wesentlichen fluiddicht an dem korrespondierenden Bauteil, d.h. Aufnahme oder Welle, festgelegt ist. Der Passkörper kann hierdurch z.B. Axialbewegungen des Dichtringkörpers folgen. Die rotatorische Bewegung zwischen Welle und Aufnahme wird somit zumindest im Wesentlichen vollständig von den Dichtringen aufgenommen, d.h. durch eine rotatorische Bewegung der Dichtringe gegenüber Dichtringträger und/oder Passkörper. Die rotatorische Bewegung zwischen Welle und Aufnahme kann zumindest teilweise oder im Wesentlichen vollständig von einer der beiden Dichtflächen des jeweiligen Dichtringes aufgenommen werden (z.B. der Anlagefläche gegenüber dem Dichtringsträger), wobei die andere der Dichtflächen dieses Dichtringes (z.B. die Anlagefläche gegenüber dem Dichtringsträger) gegenüber dem korrespondierenden Bauteil eine geringere oder keine rotatorische Bewegung durchführt; die erstgenannte der beiden Dichtringflächen kann eine größere Querschnittsbreite als die letztgenannte aufweisen.

Der Dichtring ist derart ausgebildet, dass dessen mit dem Dichtringträger und dem Passkörper wechselwirkenden Dichtflächen in einem Winkel zueinander angeordnet sind, insbesondere einem Winkel von kleiner 90°. Der Winkel zwischen den beiden Dichtflächen des Dichtringes kann 20-80° oder 30-60°, vorzugsweise 40-50° oder ca. 45° betragen. Hierdurch kann zum einen der Dichtring einfach an die jeweiligen Erfordernisse angepasst werden und eine Ausbildung von aufwendig herzustellenden Rechtecknuten zur Aufnahme des Dichtringes ist entbehrlich. Weiterhin kann durch die Wahl des zwischen den Dichtflächen eingeschlossenen Winkels des Dichtringes die Kraftverteilung der Anpresskraft des Dichtringes an Dichtringträger und Passkörper bei gegebenem Öldruck wahlweise eingestellt werden. Hierdurch können dann bei gegebener Oberflächenqualität der jeweiligen Anlageflächen die Relativgeschwindigkeiten der Drehung des Dichtringes gegenüber dem Dichtringträger bzw. dem Passkörper eingestellt werden.

Vorzugsweise sind somit die beiden Dichtringe von Nuten aufgenommen, die sich aus Dichtringträger und Passkörper zusammensetzen, wobei vorzugsweise die die Nut bildenden Bereiche beider Bauteile hinterschneidungsfrei sind. Die eine Dichtfläche aufweisenden Nutflanken von Dichtungsträger und/oder Passkörper, vorzugsweise des Passkörpers, kann zu einer Senkrechten zu der Wellenachse (und auch zu der Wellenachse selber) schräg angestellt sein. Passkörper und Dichtringträger sind allgemein als ringförmige Bauteile ausgeführt.

Vorzugsweise ist die Dichtringanordnung derart ausgebildet, dass der Dichtring im Wesentlichen keine Relativbewegung zu dem Passkörper durchführt oder die Rotationsgeschwindigkeit des Dichtringes gegenüber dem Passkörper geringer ist als die gegenüber dem Dichtringträger. Die relativen Rotationsgeschwindigkeiten können sich um einen Faktor ≥ 5 oder ≥ 8-10 unterscheiden, vorzugsweise ≥ 20-30. Hierdurch werden Abrieb und Verschleiß weiter vermindert.

Weisen die beiden Dichtringe jeweils einen dreieckigen Querschnitt auf, so kann jeweils die größte Querschnittsseite des Dichtringes abdichtend an dem Passkörper und die außenseitig an dem Dichtring angeordnete Querschnittsseite abdichtend an dem Dichtringträger anliegen. Der im Querschnitt dreieckige Dichtring kann rechtwinkelig oder gleichschenkelig ausgebildet sein. Im Falle eines rechtwinkeligen Dichtringes kann somit die Hypotenuse abdichtend an dem Passkörper und die außenseitig angeordnete Kathete des Dichtringes abdichtend an dem Dichtringträger anliegen. Die an dem Dichtringträger anliegende Querschnittsseite des Dichtringes kann jeweils gleich oder länger sein als die weder an Dichtringträger noch Passkörper anliegende Dichtringseite, gegebenenfalls auch kürzer als diese. Die abdichtenden Dichtringflächen sind vorzugsweise im Querschnitt plan oder leicht nach außen gewölbt, die freie (nicht abdichtende Dichtringfläche), zumeist die radiale Innenfläche des Dichtringes, kann im Querschnitt plan, nach außen oder nach innen gewölbt oder anders ausgestaltet sein.

Eine der Dichtflächen des Dichtringes, vorzugsweise die an dem Passköper anlegbare oder anliegende, kann schräg zu einer senkrecht der Axialrichtung der Welle angeordneten Richtung verlaufen. Eine der Dichtflächen des Dichtringes, vorzugsweise die an dem Dichtringträger anlegbare oder anliegende, kann zumindest im Wesentlichen parallel zu einer senkrecht der Axialrichtung der Welle angeordneten Richtung verlaufen, beispielsweise einen Winkel von ≤ 20-30° oder ≤ 5-10° zu dieser Richtung aufweisen.

Die nicht an Passkörper oder Dichtringträger anlegbare Fläche des Dichtringes, zumeist die radiale Innenseite desselben, wird in Einbaulage vom Öldruck kraftbeaufschlagt und presst den Dichtring an seine Dichtflächen an, diese druckseitige Fläche kann parallel oder in einem Winkel von z.B. ≤ 45° oder vorzugsweise ≤ 20-30° oder ≤ 5-10° zur Wellenachse angestellt sein.

Die Dichtflächen von Dichtring und Dichtringträger oder Passkörper können jeweils flächig, vorzugsweise vollflächig, aneinander anliegen.

Vorzugsweise sind die Dichtringe somit radial beabstandet von Welle und Aufnahme zwischen diesen angeordnet.

Die Öldrehdurchführung kann derart ausgebildet sein, dass der Dichtringträger und der Passkörper vorzugsweise geringfügig oder nicht in Axialrichtung der Welle gegeneinander verschiebbar angeordnet sind (mit oder ohne Berücksichtigung einer Wechselwirkung bzw. Zentrierungswirkung der Dichtringe mit diesen). Gegebenenfalls können Passkörper und Dichtringträger in beiden Axialrichtungen der Welle gleichzeitig aneinander anliegen, so dass diese bei Kraftbeaufschlagung in Axialrichtung der Welle (beispielsweise durch den Öldruck oder äußere Krafteinwirkung) unverschieblich zueinander angeordnet sind. Der Passkörper wird hierdurch durch den Dichtringträger zentriert. Dies ist aufgrund von Reibungsverlusten jedoch weniger bevorzugt.

Vorzugsweise sind Dichtringkörper und Passkörper in Axialrichtung der Welle durch einen zumindest geringfügigen radial verlaufenden Spalt voneinander beabstandet, der beidseitig des Passkörpers vorgegeben sein kann, wobei die Dichtringe durch ihre Anpressung gegen den Passkörper und/oder Dichtringträger diesen Spalt überbrücken. Hierdurch ist eine zumindest geringfügige axiale Verschiebung von Dichtringträger und Passkörper zueinander ermöglicht, welche mit einer axialen Verschiebung von Welle und Aufnahme gegeneinander einhergehen kann. Diese axiale Verschiebung kann durch die Dichtringe und währender Abdichtung derselben ausgeglichen werden, und zu einer Expansion und/oder Kompression des jeweiligen Dichtringes führen, der hierzu geschlitzt ist.

Hierdurch können Toleranzen von Dichtringträger und/oder Passkörper oder von Welle und/oder Aufnahme oder geringfügige Axialverschiebungen von Welle gegen Aufnahme beim Betrieb der Vorrichtung oder Maschine aufgefangen werden. Dieser Spalt kann in einen keilförmigen, sich zum Öldruckraum hin erweiternden Zwischenraum zwischen Passkörper und Dichtringträger übergehen, in den Dichtringe mit keilförmigem bzw. dreieckigem Querschnitt eingesetzt sind. Die Keil- bzw. Dreicksspitze des Dichtringes kann dem Spalt zugewandt sein. Der Spalt (jeweils auf beiden Seiten des Passkörpers) kann beispielsweise ≤ 0,2-0,15 mm betragen, vorzugsweise ≤ 0,05-0,1 mm, vorzugsweise ≤ 0,015-0,03 mm. Dieser Spalt an jeder Seite des Passkörpers kann eine axiale Weite im Bereich von ca. 2/100 bis ca. 5/10 mm oder bis ca. 1mm, vorzugsweise 5/100 bis 3/10mm oder 1/10 bis 2/10mm betragen. Der Spalt ist vorzugsweise derart klein bemessen, dass beim Einschieben von Dichtringträger und Passkörper in den Zwischenraum zwischen Welle und Aufnahme nicht eine Verkantung von Dichtringträger und /oder Passkörper erfolgt. Allgemein sind die Dichtringe radial komprimierbar, und/oder expandierbar aufgrund eines durchtrennenden Montageschlitzes. Die Dichtringe können hierbei unter einer Vorspannung an dem Dichtringträger und/oder Passkörper anliegen. Weist somit der jeweilige Dichtring eine schräg angestellte Dichtfläche auf (die zu einer Senkrechten zu der Wellenachse schräg steht), so wird dieser durch den Öldruck in den Zwischenraum zwischen Dichtringträger und Passkörper gedrückt und hierdurch der Spalt zwischen diesen Bauteilen abgedichtet. Axialverschiebungen von Welle und Aufnahme zueinander können somit durch eine Kompression und/oder Expansion der Dichtringe aufgefangen werden.

Radialverschiebungen von Welle und Aufnahme gegeneinander können in Bezug auf die Bauteile insgesamt oder auch nur bereichsweise auftreten, wie z.B. aufgrund von Toleranzen oder Unwuchten. Derartige Radialverschiebungen können dadurch aufgefangen werden, dass eine (vorzugsweise genau eine) der einander gegenüberliegenden Seitenflächen von Dichtringträger und Passkörper, vorzugsweise des Dichtringträgers, praktisch senkrecht zu der Wellenachse verlaufen, beispielsweise in einem Winkel von ≤ 20-30° oder ≤ 5-10° oder ≤ 2-3 oder ca. 0° zur Senkrechten der Wellenachse, wobei diese Seitenfläche eine Dichtfläche gegenüber dem Dichtring bereitstellt. Entsprechendes kann für die korrespondierende Dichtfläche des Dichtringes gelten, die flächig an die genannte Seitenfläche anlegbar ist. Der Dichtring kann hierdurch in radialer Richtung an dieser Fläche permanent dichtend anliegend radial komprimieren und/oder expandieren.

Vorzugsweise besteht der Dichtringträger, welcher den Passkörper axial außenseitig umgibt und daher die auf die Öldrehdurchführung einwirkenden Axialkräfte aufnimmt, aus einem Werkstoff höherer Festigkeit und/oder Zähigkeit als der Passkörper, beispielsweise aus einem metallischen Werkstoff wie einem Eisenwerkstoff (z.B. Stahl, Edelstahl), Leichtmetall wie Aluminiumlegierung oder dergleichen. Das Bauteil geringerer Festigkeit (beispielsweise der Passkörper) kann aus einem Kunststoffmaterial bestehen, welches in einem Spritzgussverfahren hergestellt sein kann, und kann allgemein elastisch deformierbar ausgebildet sein, insbesondere im Hinblick auf radiale Deformation. Die Anlagefläche des Dichtringes an dem Bauteil geringerer Festigkeit von Dichtringträger und Passkörper, beispielsweise an dem Passkörper, kann größer sein als die abdichtende Anlagefläche des Dichtringes an dem Bauteil größerer Festigkeit, beispielsweise an dem Dichtringträger. Allgemein kann die Rotationsgeschwindigkeit des Dichtringes gegenüber dem Bauteil geringerer Festigkeit niedriger sein als die gegenüber dem Bauteil höherer Festigkeit.

Der Passkörper kann teilweise in den Dichtringträger eingesenkt sein, wobei der eingesenkte Bereich eine Dichtfläche gegenüber dem Dichtring bereitstellt. Hierdurch kann der axial außen liegende Dichtringträger die gesamten durch den Öldruck erzeugten Kräfte aufnehmen. Allgemein kann somit das Bauteil geringerer Festigkeit der Passkörper sein, welcher in der Aufnahme der Welle drehfest oder mit Schlupf gegenüber seinem Befestigungsteil verdrehbar, angeordnet sein kann. Das Bauteil größerer Festigkeit kann der Dichtringträger sein, welcher an der Welle drehfest befestigt sein kann. Gegebenenfalls kann jedoch auch das Bauteil größerer Festigkeit bzw. der Dichtringträger an der Aufnahme drehfest festgelegt sein und der Passkörper als Bauteil geringerer Festigkeit an der Welle festgelegt sein.

Die Öldrehdurchführung kann derart ausgebildet sein, dass die Dichtringe jeweils mit ihrem Querschnitt vollständig innerhalb des Querschnittes bzw. der Querschnittskontur des Dichtringträgers, welcher der Passkörper axial außenseitig umgibt, angeordnet sein kann. Die Dichtfläche des axial innen liegenden Bauteils (beispielsweise des Passkörpers) gegenüber dem Dichtring kann vollständig im Querschnitt bzw. der Querschnittskontur des axial außen liegenden Bauteils (z.B. des Dichtringträgers) angeordnet sein.

Der Dichtringträger kann als Zylinder mit umgebördelten Flanken ausgebildet sein und zumindest im Wesentlichen ein U-Profil aufweisen, wobei die Flankeninnenseiten Dichtflächen gegenüber dem Dichtring bereitstellen können. Der Dichtringträger kann einstückig ausgebildet und insbesondere als Blechumformteil ausgeführt sein. Der mittlere, zylindrische Bereich des Dichtringträgers kann verdrehfest an der Welle (oder auch in der Aufnahme) festlegbar sein, vorzugsweise mit seiner gesamten Breite, die als Befestigungsfläche oder Klemmfläche gegenüber dem korrespondierenden Bauteil fungieren kann. Der mittlere zylindrische Befestigungsbereich des Dichtringträgers kann unter Umständen auch radiale Vorsprünge wie z.B. umlaufende Sicken aufweisen. Die Flanken des Dichtringträgers können radial innen und/oder außen scheibenförmig bzw. plan sein, sie können jedoch eventuell auch strukturierte Querschnitte aufweisen, z.B. Umbiegungen oder Knicke, die die Breite des Trägers in diesem Bereich erweitern oder verengen können. Die Breite der Befestigungsfläche des Trägers kann hierdurch unabhängig von der Passkörperbreite dimensioniert werden. Der mittlere umlaufende Bereich des Dichtringträgers kann eine oder mehrere Öldurchtrittsöffnungen aufweisen, um die Außenseite des Trägers fluiddurchlässig mit dem Öldruckraum zu verbinden.

Der Passkörper kann einen im Wesentlichen U-förmigen Querschnittkörper aufweisen, wobei die freien Stirnseiten der Flanken als Passflächen gegenüber der Aufnahme (oder ggf. gegenüber der Welle) ausgebildet sein können. Der Übergangsbereich der Flanken zum mittleren Bereich des Passkörpers hin oder die radial innen liegenden Stirnseiten der Flanken können außenseitig jeweils als Dichtfläche gegenüber dem Dichtring ausgebildet sein. Der mittlere Bereich des Passkörpers kann allgemein aber auch von den radial innen- und/oder außen liegenden Stirnseiten der seitlichen Flanken desselben radial beabstandet sein, so das bspw. eine H-Form resultiert, oder abgewandelte Formen hiervon, wie bei gebogenem mittleren Bereich M-förmig usw.. Der mittlere Bereich des Passkörpers kann somit von der Befestigungsfläche des diesen haltenden Bauteils, z.B. der Aufnahme, radial beabstandet sein. Der mittlere Bereich des Passkörpers kann von dem Dichtringträger teilweise oder vollständig aufgenommen sein. Der mittlere Bereich des Passkörpers kann allgemein mit mindestens einer oder mehreren über den Umfang des Passkörpers verteilt angeordneten Öldurchtrittsöffnungen versehen sein, um den Öldruckraum mit einem etwaige vorgesehenen Ölführungskanal des Bauteils, an welchem der Passkörper drehfest befestigt ist, zu verbinden.

Die Befestigungsflächen bzw. Klemmflächen von Welle und Aufnahme sind somit Radialflächen der jeweiligen Bauteile, welche aufeinander zuweisen.

Vorzugsweise weisen die dem Dichtringträger zugewandten Seiten des Passkörpers einen seitlich zum Dichtringträger vorkragenden Bereich auf. Die Radialerstreckung dieser vorkragenden Bereiche kann wesentlich geringer sein als die Radialerstreckung des Passkörpers oder des Passkörperbereiches, welcher in dem Querschnittsbereich des Dichtringträgers aufgenommen ist, beispielsweise ≤ 1/2 - 1/4 oder ≤ 1/8 - 1/16 derselben. Vorzugsweise sind die vorkragenden Seitenbereiche des Passkörpers lediglich linienförmig ausgebildet. Die vorkragenden Bereiche verhindern, dass die jeweilige Außenseite des Passkörpers mit der Innenseiten des Dichtringträgers flächig zur Anlage kommt, wenn beispielsweise der Dichtring geringfügig komprimiert wird, beispielsweise aufgrund von Öldruckschwankungen oder Toleranzen der Bauteile. Gegebenenfalls kann der Passkörper mit den vorkragenden Bereichen an einer oder beiden Seiten desselben auch an den Innenseiten der radialen Flanken des Dichtringträgers anliegen, wodurch Reibungsverluste minimiert werden.

Vorzugsweise bestehen das Aufnahmebauteil für die Welle und/ oder die Welle aus einem Leichtmetallwerkstoff, beispielsweise Aluminium oder einer Aluminiumlegierung. Die erfindungsgemäße Öldrehdurchführung ist in besonderer Weise an eine derartige Aufnahme und/oder Welle angepasst, da aufgrund der verdrehfesten Anordnung von Dichtringträger und Passkörper an dem jeweiligen Bauteil Reibungsverluste und damit auch Abrieb an der Aufnahme und/oder der Welle praktisch ausgeschlossen sind. Dies gilt insbesondere bei einer Klemmbefestigung von Dichtringträger und Aufnahme. Die Befestigungsbereiche von Aufnahme und/ oder Welle können in besonderer Weise ausgebildet sein, beispielsweise durch einen etwas unterschiedlichen Durchmesser und/oder eine unterschiedliche Oberflächenbeschaffenheit wie beispielsweise auch Oberflächenrauhigkeit, um eine Klemmbefestigung von Dichtringträger und Passkörper zu unterstützen. Vorzugsweise sind die Befestigungsbereiche von Aufnahme und Welle jedoch nicht anders beschaffen als die unmittelbar benachbarten oder angrenzenden Bereiche der jeweiligen Bauteile. Weiterhin ist es nicht erforderlich, dass die Befestigungsbereiche von Aufnahme und Welle für die Öldrehdurchführung oberflächenvergütet, beispielsweise oberflächengehärtet oder eloxiert sind.

Der Dichtringträger kann als in Umfangsrichtung durchgehendes Bauteil ausgebildet sein, vorzugsweise ohne materialgeschwächte Umfangsbereiche. Der Passkörper weist einen Montageschlitz auf und ist bei der Montage elastisch deformierbar, beispielsweise in Umfangsrichtung kompressibel oder expandierbar. Vorzugsweise sitzt der montierte Passkörper mit einer elastischen Vorspannung an seinem Befestigungsteil (Aufnahme oder Welle) an.

Der Dichtringträger und/oder der Passkörper können mindestens eine oder mehrere über den Umfang derselben verteilt angeordnete Ölzulaufbohrungen oder allgemein Öldurchtrittsöffnungen aufweisen, welche einen Ölführungskanal des jeweiligen Bauteils fluiddurchlässig mit dem Druckraum verbinden..

Die Erfindung betrifft weiterhin eine Maschine oder Vorrichtung wie z.B. ein Getriebe mit mindestens einer erfindungsgemäßen Öldrehdurchführung, welcher an Welle und Aufnahme befestigt ist, wobei die Welle und/oder die Aufnahme mindestens eine Öldrehdurchführung aufweisen, welche fluidführend mit der Öldrehdurchführung bzw. dem Zwischenraum von Dichtringträger und Passkörper (Öldruckraum) in Verbindung steht.

Die Erfindung wird nachfolgend anhand eines Ausführungsbeispiels beschrieben. Es zeigen:

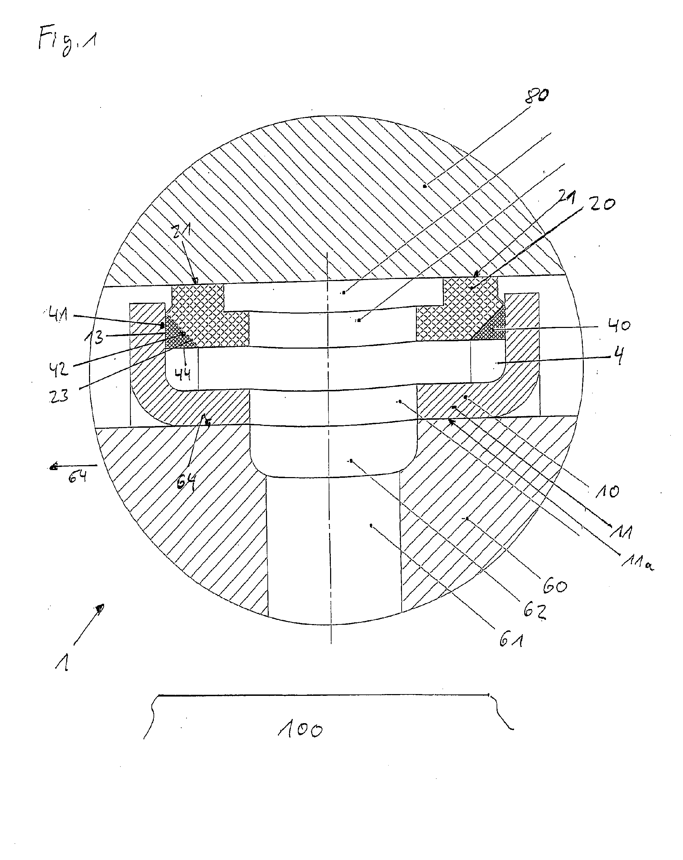

Fig. 1: eine Schnittdarstellung durch eine erfindungsgemäße Öldrehdurchführung in montiertem Zustand;

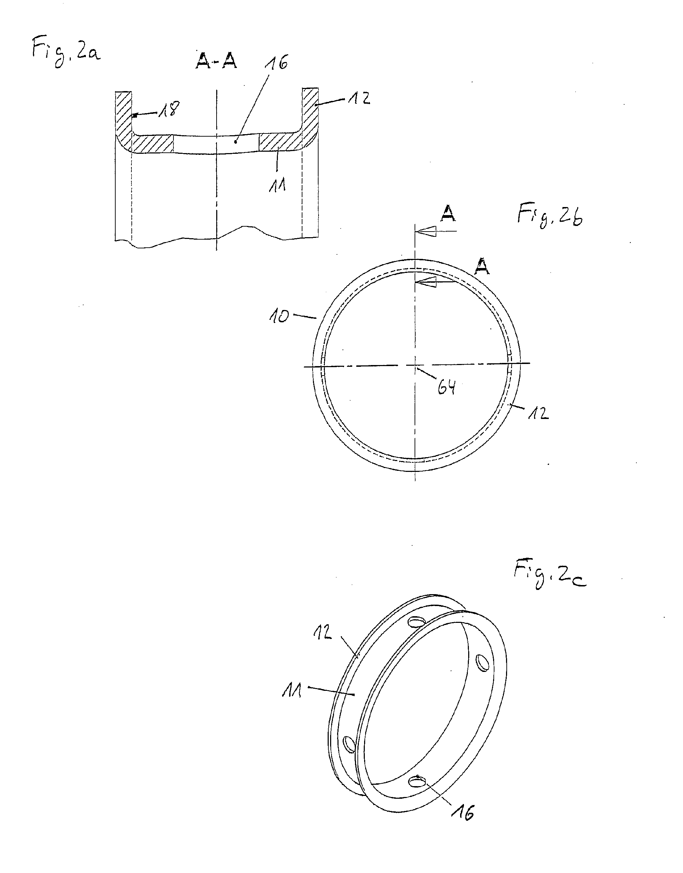

Fig. 2: den Dichtringträger einer Öldrehdurchführung nach Figur 1 in perspektivischer Ansicht (Figur 2a), in Seitenansicht (Figur 2b) und im Teilquerschnitt (Figur 2c);

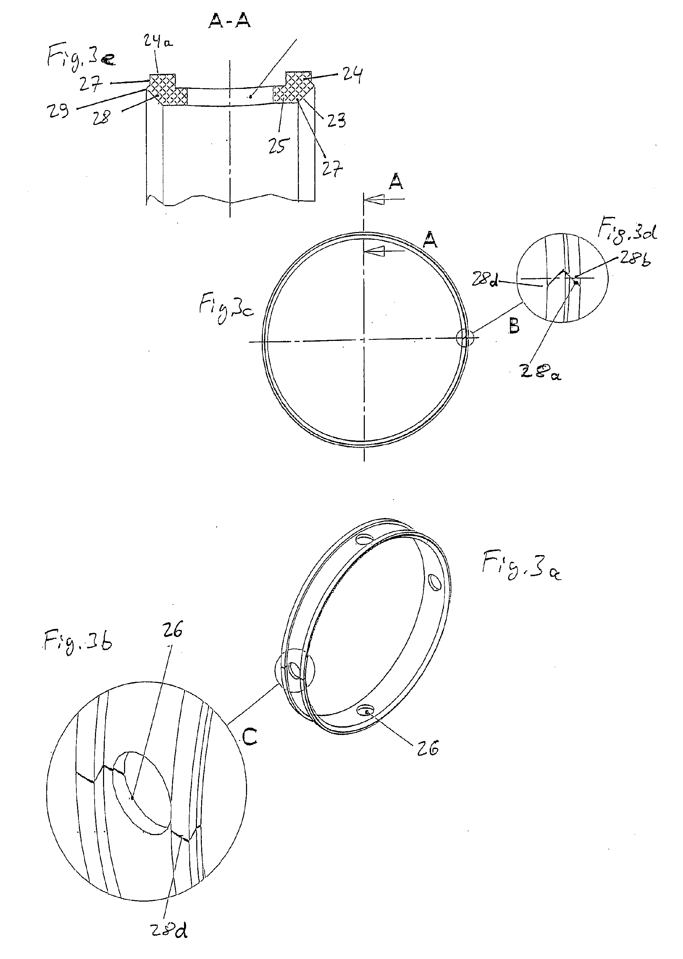

Fig. 3: einen Passkörper der Öldrehdurchführung nach Figur 1 in perspektivischer Ansicht und in einer Detailansicht (Figur 3a, 3b), in Seitenansicht und in einer Detailansicht (Figur 3c, 3d) und im Teilquerschnitt (Figur 3e)

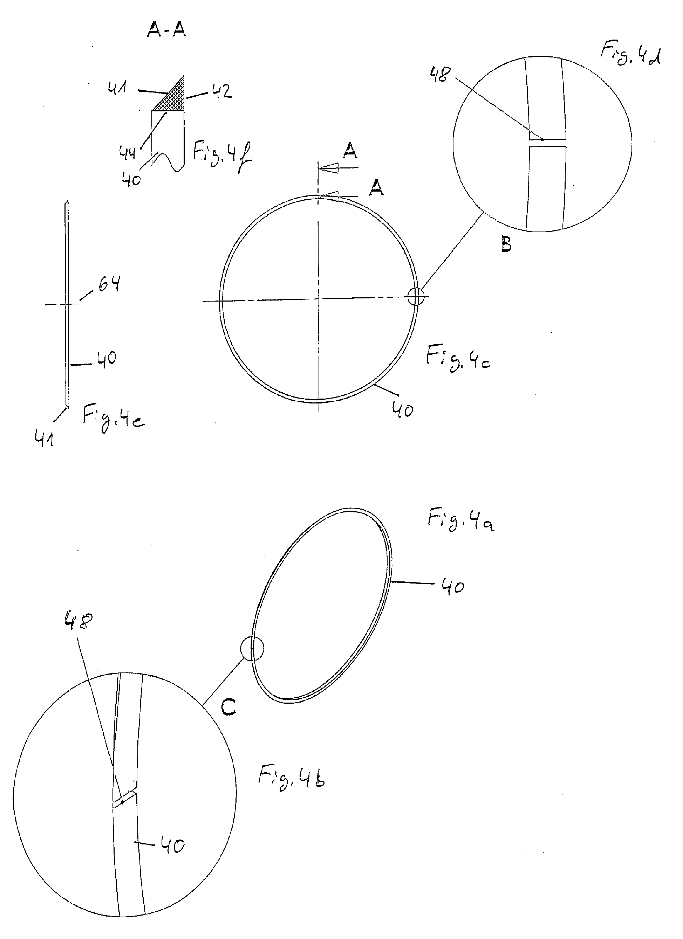

Fig. 4 einen Dichtring der Öldrehdurchführung nach Figur 1 in perspektivischer Ansicht und in Detailansicht (Figur 4a, 4b) in Seitenansicht und Detailansicht (Figur 4c, 4d) in schmalseitiger Ansicht (Figur 4e) und im Teilquerschnitt (Figur 4f)

Die erfindungsgemäße Öldrehdurchführung 1 kann in einer Maschine oder Vorrichtung wie beispielsweise einem Getriebe 100 eingesetzt werden. Die Öldrehdurchführung kann zwischen einer rotierbaren Welle 60 und einer Wellenaufnahme 80 angeordnet sein, wobei der ölbeaufschlagbare Druckraum 4 der Öldrehdurchführung fluiddurchlässig mit einem in der Welle und/oder in der Aufnahme angeordneten Ölführungskanal verbunden ist. Nach dem Ausführungsbeispiel weist die Welle 60 einen Ölführungskanal 61 bzw. eine Ölbohrung auf, welche in eine vorzugsweise umlaufende Ölnut 62 der Welle münden kann. Durch die Öldrehdurchführung wird der mit einem Öldruck beaufschlagbare Druckraum 4 beidseitig in axialer Richtung der Welle abgedichtet.

Die erfindungsgemäße Öldrehdurchführung weist einen Dichtringträger 10, einen Passkörper 20 und zwei zwischen Dichtringträger 10 und Passkörper 20 angeordnete, axial beabstandete Dichtringe 40 auf. Der Dichtringträger 10 ist hierbei verdrehfest an der Welle angeordnet, wozu dieser im Klemmsitz auf der radial außenseitigen Befestigungsfläche 64 der Welle aufsitzt. Der Klemmbereich des Dichtringträgers kann dessen mittlerer Bereich 11 sein, der sich bis zu dessen beiden seitlichen radialen Flanken erstrecken kann, genauer die radiale Außenfläche 11a des mittleren Bereichs. Die Klemmverbindung zwischen Dichtringträger und Welle ist unter den Betriebsbedingungen der Öldrehdurchführung öldicht ausgeführt, ohne dass vorzugsweise weitere Bauelemente vorgesehen sind. Zur Festlegung des Dichtringträgers 10 an der Welle 60 kann dieser in Axialrichtung auf die Welle aufgeschoben und an seiner Sollposition positioniert werden. Eine radiale Deformation wie z.B. eine radiale Kompression (oder bei Anordnung an der Aufnahme radiale Expansion) zur Ausbildung der Klemmwirkung ist hierbei nicht erforderlich.

Der Passkörper 20 ist seinerseits mit einer radial angeordneten, hier radial außenseitig angeordneten, Befestigungsfläche 21 an einer radialen Befestigungsfläche 81 an der Aufnahme 80 angeordnet. Auch hier erfolgt die Befestigung des Passkörpers an der Aufnahme vorzugsweise ausschließlich durch eine Klemmwirkung, wobei auch hier der Befestigungs- bzw. Klemmbereich zwischen Passkörper und Aufnahme fluiddicht ausgeführt ist, vorzugsweise allein durch die Klemmverbindung. Die Klemmverbindung kann elastisch erfolgen. Die Klemmverbindung zwischen Passkörper und Aufnahme kann durch Einschieben des Passkörpers in die Aufnahme in Axialrichtung 64 der Welle erfolgen. Der Passkörper kann zumindest unter bestimmten Betriebsbedingungen eine gewisse Rotation zu der Aufnahme durchführen (Schlupf), sofern eine ausreichend fluiddichte Verbindung mit der Aufnahme (oder bei anderer Einbausituation mit der Welle) vorliegt, gegebenenfalls verdrehfest in der Aufnahme festgelegt sein. Die Aufnahme kann allgemein ein Gehäuse oder eine Hohlwelle sein.

Zwischen Passkörper 20 und Dichtringträger 10 sind zwei axial voneinander beabstandete Dichtringe 40 angeordnet, welche jeweils mit einer Dichtfläche 41 an dem Dichtringträger 10 und einer Dichtfläche 42 an dem Passkörper 20 anliegen. Dichtringträger und Passkörper weisen hierzu korrespondierende Dichtflächen 13, 23 auf. Der Dichtring 40 ist jeweils nicht auf einem rechtwinkligen Querschnitt beschränkt, wie dargestellt, sondern kann auch einen nicht-rechtwinkligen und/oder nicht-gleichschenkeligen Querschnitt aufweisen. Hierdurch kann die Kräfteverteilung des Dichtringes auf die jeweiligen Dichtflächen aufgrund des Öldruckes und damit die Relativgeschwindigkeit des Dichtringes und Passkörper bzw. Dichtringträgers den jeweiligen Erfordernissen angepasst werden. Vorzugsweise weist die mit dem Passkörper 20 wechselwirkende Dichtfläche 42 des Dichtringes 40 (hier die Hypotenuse) eine größere Anlagefläche auf als die mit dem Dichtringträger 10 wechselwirkende Dichtfläche 41. Der rechte Winkel ist hierbei dem Druckraum 4 zugewandt. Bei nicht rechtwinkeligem Dichtring kann dieser Winkel kleiner oder größer 90° sein, beispielsweise im Bereich von 60-120°. Die radial innen liegende Fläche 44 des Dichtringes kann allgemein die vom Öldruck beaufschlagte Fläche darstellen, um den Dichtring mit seiner Dichtfläche gegen Passkörper und Dichtringträger zu drücken. Die beiden Dichtringe können allgemein baugleich ausgebildet sein.

Die Dichtflächen 13 des Dichtringträgers 10 sind hier zumindest im wesentlichen senkrecht zu der Axialrichtung 64 der Welle angeordnet, sie können ggf. auch einen Winkel von 45-135°, vorzugsweise 60-120°, besonders bevorzugt 75-105° oder ca. 90° mit der Axialrichtung des Dichtringes einschließen.

Die Dichtringe 40 sind derart ausgebildet, dass diese auch bei hohen Rotationsgeschwindigkeiten bzw. auch im oberen Drehzahlbereich der jeweiligen Vorrichtung gegenüber dem Passkörper 20 praktisch keine oder eine wesentlich geringere rotatorische Relativbewegung durchführen, als gegenüber dem Dichtringträger 10. Dies kann durch die Querschnittsgeometrie des Dichtringes entsprechend eingestellt werden.

Der Dichtringträger 10 und der Passkörper 20 sind als einstückige Bauteile ausgebildet, welche im Wesentlichen aus paarweise einander gegenüberliegenden Seitenbereichen oder Flanken 12, 24 bestehen, welche im wesentlichen ringförmig bzw. scheibenförmig ausgebildet sein können, und einem diese verbindenden mittleren Bereich 11, 25, welcher jeweils im wesentlichen zylindrisch ausgebildet sein kann. Die mittleren Bereiche 11, 25 können unabhängig voneinander im Wesentlichen an den radialen Endbereichen der Seitenbereiche angeordnet sein, so dass Dichtringträger und Passkörper jeweils einen im Wesentlichen U-förmigen Querschnitt aufweisen. Die beiden U-Profile können mit gleicher Orientierung zueinander ineinander eingesteckt sein, so dass die freien Stirnseiten der jeweiligen Seitenbereiche in die gleiche Richtung weisen. Der mittlere Bereich kann jeweils aber auch beabstandet von den radialen Enden der Seitenbereiche 12, 24 zurückversetzt angeordnet sein kann, so dass im Wesentlichen ein H-förmiger Querschnitt resultiert, was insbesondere für den Passkörper gelten kann.

Beim Dichtringträger 10 ist der mittlere Bereich 11 desselben, der zwischen den beiden seitlichen Flanken angeordnet ist, als Klemmfläche ausgebildet. Beim Passkörper sind die freien Stirnseiten 24a der beiden Seitenbereiche 24 jeweils als Befestigungs- bzw. Klemmfläche ausgebildet, gegebenenfalls kann auch der mittlere, zylindrische Bereich des Passkörpers zum korrespondierenden Befestigungsteil, hier der Aufnahme 80, versetzt sein und als radiale Klemmfläche dienen. Es versteht sich, dass allgemein Dichtringträger und Passkörper radial von dem anderen Bauteil von Welle und Aufnahme, an welchem diese nicht vorzugsweise verdrehfest befestigt sind, beabstandet sind.

Die zentralen Bereiche zwischen Dichtringträger 10 und Passkörper 20 sind jeweils mit Öldurchtrittsöffnungen 16, 26 versehen, welche gleichmäßig über den Umfang der jeweiligen Bauteile 10, 20 verteilt angeordnet sein können.

Der Dichtringträger 10 umgibt mit seinen beiden Seitenbereichen bzw. Flanken 12 den Passkörper 20 seitlich, so dass der Passkörper in den Querschnittsbereich des Dichtringträgers eingreift bzw. in den Dichtringträger teilweise eingesetzt ist. Der Dichtringträger 10 umgibt somit auch seitlich die gegen die Dichtringe 40 anlegbaren Dichtflächen 23 des Passkörpers. Der Dichtringträger 10 ist hierbei aus einem druckfesten und unter den Betriebsbedingungen der Öldrehdurchführung undeformierbarem Material gefertigt, beispielsweise aus einem Metall. Sämtlich axialen Kräfte, insbesondere Axialkräfte durch den Öldruck, welche unmittelbar auf den Dichtringträger oder aber auch von dem Passkörper auf den Dichtringträger ausgeübt werden, können somit von dem formstabilen Dichtringträger vollständig aufgefangen werden.

Der Passkörper 20 kann an seinen Seitenbereichen 24 im Bereich der in den Druckraum hineinragenden Enden 27 derselben Dichtflächen 23 aufweisen, welche mit den beiden Dichtringen 40 abdichtend zur Anlage kommen. Nach dem Ausführungsbeispiel ist hierzu der Übergangsbereich 28 zwischen den seitlichen Flanken 24 bzw. Schenkeln des Passkörpers und dem mittleren zylindrischen Bereich 25 als Dichtfläche 23 ausgebildet. Die Dichtflächen 13 des Dichtringträgers 10 gegenüber den Dichtringen 40 können jeweils an der Innenseite 18 der seitlichen Flanken 12 des Dichtringträgers angeordnet sein.

Die Seitenbereiche 24 des Passkörpers 20 können in axialer Richtung von den Innenseiten 18 der Seitenbereiche bzw. Flanken 12 des Dichtringträgers geringfügig beabstandet sein, wozu an den axial außen liegenden Seitenflächen 27 des Passkörpers in Richtung auf die Innenseiten 18 der Flanken des Dichtringträgers vorkragende, vorzugsweise umlaufende, Bereiche 29 , vorgesehen sein können. Die vorkragenden Bereiche 29 des Passkörpers können an den Innenseiten 18 der Dichtringträgerflanken 12 anliegen oder vorzugsweise geringfügig von diesen beabstandet sein. Der Zwischenraum zwischen Passkörper und Dichtringträger kann jeweils durch den Dichtring überbrückt sein. Der Passkörper ist (wenn Welle und Aufnahme dies zulassen bzw. in demontiertem Zustand aber in Einbaukonfiguration der Öldrehführung) gegenüber dem Dichtringträger radial verschiebbar, hierzu sind die Dichtringe durch den Öldruck komprimierbar und/oder expandierbar, wozu diese mit den Umfang durchtrennenden Schlitzen versehen sind. Die Dichtringe werden aufgrund ihrer Geometrie durch den Öldruck zwischen Passkörper und Dichtringträger zentriert.

Der Dichtringträger 10 kann an seinem Umfang als durchgehendes Bauteil ausgebildet sein. Der Passkörper 20 und unabhängig hiervon die beiden Dichtringe 40 können jeweils eine Montagenut 28, 48 aufweisen, die das jeweilige Bauteil in Umfangsrichtung durchtrennt. Hierdurch kann der Passkörper 20 leichter im Klemmsitz in der Aufnahme festgelegt werden und die Dichtringe können einfacher in ihre Sollposition eingepasst werden. Der Durchmesser des Passkörpers 20 kann derart bemessen sein, dass dieser eigenständig mit einer Vorspannung in der Aufnahme 80 angeordnet ist. Die den Passkörper durchtrennende Montagenut 28d ist in Form eines Schlitzes 28d ausgebildet vorzugsweise in Art einer Labyrinthdichtung, wozu die durch die Montagenut getrennten beiden Stirnseiten 28a, b des Passkörperringes mit einspringendem und vorspringendem Winkel ausgebildet sein können. Zumindest eine der Flanken des V-förmigen Schlitzes 28d kann somit an der korrespondierenden Flanke der gegenüberliegenden Stirnseite abdichtend anliegen. Die Montagenut 28d des Passkörpers kann im Bereich einer Öldurchtrittsöffnung 26 angeordnet sein. Die Dichtringe 40 können jeweils ebenfalls einen Montagespalt 48 aufweisen, welcher zudem eine Aufweitung und/oder Kompression der Dichtringe und zudem eine Zentrierung des Passkörpers ermöglicht. Gegebenenfalls kann auch der Montagespalt 48 der Dichtringe jeweils mit einer Labyrinthdichtung versehen sein.

Der Dichtringträger 10 kann aus Metall oder einem druckfesten, z.B. faserverstärktem Kunststoff hergestellt sein, insbesondere als Blechumformteil. Der Passkörper 20 und/oder die Dichtringe 40 können aus einem vorzugsweise elastisch deformierbaren Kunststoffmaterial gefertigt sein, beispielsweise im Spritzgussverfahren. Die Welle 60 und die Aufnahme 80 können aus einem Leichtmetallwerkstoff, beispielsweise Aluminium oder einer Aluminiumlegierung bestehen, die nicht oberflächenvergütet oder oberflächenflächengehärtet sein müssen.

## Patentansprüche

1. Dichtungsanordnung (1) zur Abdichtung eines Öldruckraumes zwischen einer rotierbaren Welle (60) und einer Wellenaufnahme (80), wobei die Dichtungsanordnung einen radialen Öldurchlass ausbildet, um einen Ölführungskanal (61) von Welle und/oder Aufnahme fluiddurchlässig mit dem Öldruckraum (4) zu verbinden, wobei die Dichtungsanordnung (10, 20, 40) den Öldruckraum beidseitig in Axialrichtung der Welle abdichtet, wobei die Dichtungsanordnung (1) einen drehfest und fluiddicht mit der Welle oder der Aufnahme befestigbaren Dichtringträger (10) aufweist, welcher koaxial zu Welle (60) oder Aufnahme (80) angeordnet werden kann und einen Passkörper (20), welcher fluiddicht an dem anderen Bauteil von Welle (60) und Aufnahme (80) anlegbar und von dem Dichtringträger seitlich in Axialrichtung der Welle umgeben ist, wobei zwischen Dichtringträger (10) und Passkörper (20) zwei axial voneinander beabstandete Dichtringe (40) angeordnet sind, wobei die Dichtringe jeweils Dichtflächen aufweisen, mit denen sie abdichtend gegen Dichtringträger (10) und Passkörper (20) anliegen, um den Öldruckraum (4) in Axialrichtung der Welle abzudichten,
die beiden Dichtringe derart ausgebildet sind, dass zumindest die radiale Innenseite der nicht an den Passkörper oder an den Dichtringträger anlegbaren Fläche des Dichtrings in Einbaulage von dem Fluid kraftbeaufschlagt ist, wobei die Dichtfläche eines jeden der Dichtringe, die mit dem Passkörper wechselwirkt, in einem Winkel zu der Dichtfläche des Dichtrings angeordnet ist, die mit dem Dichtringträger wechselwirkt,
und die Dichtringe gegenüber dem Dichtringträger und/oder dem Passkörper verdrehbar sind,
**dadurch gekennzeichnet**,
dass die beiden Dichtringe (40) jeweils mit einem den Umfang derselben durchtrennenden Schlitz (48) versehen sind, und
dass der Passkörper (20) mit einem den umfang desselben durchtrennenden Montage-Schlitz (28d) versehen ist.

2. Dichtungsanordnung nach Anspruch 1, **dadurch gekennzeichnet, dass** der Dichtringträger (10) im Klemmsitz drehfest auf der Welle (60) oder in der Aufnahme (80) befestigt ist und/oder dass der Passkörper (20) im Klemmsitz in der Aufnahme (80) oder auf der Welle (60) befestigt ist.

3. Dichtungsanordnung nach einem der Ansprüche 1 oder 2, **dadurch gekennzeichnet, dass** der Dichtringträger (10) und/oder der Passkörper (20) durch axiales Aufschieben auf die Welle (60) oder axiales Einschieben in die Aufnahme (80) an dem jeweiligen Bauteil von Welle und Aufnahme befestigbar ist.

4. Dichtungsanordnung nach einem der Ansprüche 1-3, **dadurch gekennzeichnet, dass** die beiden Dichtflächen (41, 42) des jeweiligen Dichtringes an Dichtringträger und Passkörper einen Winkel von 30-60° zueinander einschließen.

5. Dichtungsanordnung nach einem der Ansprüche 1-4, **dadurch gekennzeichnet, dass** die beiden Dichtringe (40) jeweils einen dreieckigen Querschnitt aufweisen und dass die größte Querschnittsseite derselben abdichtend an dem Passkörper (20) und die außenseitig an dem Dichtring (40) angeordnete Querschnittsseite abdichtend an dem Dichtringträger (10) anliegt.

6. Dichtungsanordnung nach einem der Ansprüche 1-5, **dadurch gekennzeichnet, dass** der Dichtring (40) und die gegenüber dem Dichtring (40) anliegenden Dichtflächen (13, 23) von Dichtringträger (10) und Passkörper (20) derart ausgebildet sind, dass der Dichtring (40) bei rotierender Welle (60) gegenüber dem Passkörper (20) ein geringere relative Rotationsgeschwindigkeit aufweist, als gegenüber dem Dichtringträger, oder gegenüber dem Passkörper zumindest im Wesentlichen nicht rotiert.

7. Dichtungsanordnung nach einem der Ansprüche 1-6, **dadurch gekennzeichnet, dass** der Dichtringträger (10) und der Passkörper (20) ineinander eingreifend angeordnet sind und dass der den Passkörper (20) umgreifende Dichtringträger (10) als Zylinder mit umgebördelten Flanken (12) ausgebildet ist, wobei die Flankeninnenseiten Dichtflächen (13) gegenüber dem Dichtring (40) bereitstellen.

8. Dichtungsanordnung nach einem der Ansprüche 1-7, **dadurch gekennzeichnet, dass** der Passkörper (20) zwei gegenüberliegende Flanken (24) und einen Verbindungsbereich (25) aufweist, dass die freien Stirnseiten (24a) der Flanken (24) als Anlageflächen gegenüber Aufnahme (80) oder Welle (60) ausgebildet sind, und dass der Übergangsbereich (28) der Flanken zum mittleren Bereich (25) des Passkörpers außenseitig als Dichtfläche (23) gegenüber dem Dichtring ausgebildet ist.

9. Dichtungsanordnung nach einem der Ansprüche 1-8, **dadurch gekennzeichnet, dass** der Passkörper (20) einen im Wesentlichen U-förmigen Querschnitt aufweist.

10. Dichtungsanordnung nach einem der Ansprüche 1-9, **dadurch gekennzeichnet, dass** die dem Dichtringträger (10) zugewandten Seiten des Passkörpers (20) einen seitlich zum Dichtringträger (10) vorkragenden Bereich (29) aufweisen.

11. Dichtungsanordnung nach einem der Ansprüche 1-10, **dadurch gekennzeichnet, dass** zwischen Passkörper (20) und Dichtringträger (10) ein keilförmiger, sich zum Öldruckraum hin erweiternder Zwischenraum ausgebildet ist, in den die Dichtringe (40) mit keilförmigem bzw. dreieckigem Querschnitt eingesetzt sind, wobei die Dichtringe (40) radial komprimierbar und/oder expandierbar sind.

12. Dichtungsanordnung nach einem der Ansprüche 1-11, **dadurch gekennzeichnet, dass** der Passkörper (20) aus einem Kunststoffmaterial und/oder der Dichtringträger (10) aus einem metallischen Werkstoff besteht.

13. Dichtungsanordnung nach einem der Ansprüche 1-12, **dadurch gekennzeichnet, dass** der Dichtringträger (10) in Umfangsrichtung durchgehend ausgebildet ist.

14. Dichtungsanordnung nach einem der Ansprüche 1-13, **dadurch gekennzeichnet, dass** die Aufnahme (80) und/oder die Welle (60) aus Aluminium oder einem anderen Leichtmetall bestehen, deren mit dem Dichtringträger (10) und/oder dem Passkörper wechselwirkenden Befestigungsflächen nicht oberflächenvergütet sind.

15. Vorrichtung oder Maschine mit in einer Aufnahme angeordneter rotierbarer Welle (60) und mit einer an Welle (60) und Aufnahme (80) angeordneten Dichtungsanordnung nach einem der Ansprüche 1-14.

## Claims

1. A sealing arrangement, (1) for sealing an oil pressure chamber between a rotatable shaft (60) and a shaft holder (80), wherein the sealing arrangement forms a radial oil passage in order to connect an oil conduction duct (61) from the shaft and/or holder to the oil pressure chamber (4) in a fluid-permeable manner, wherein the sealing arrangement (10, 20, 40) seals off the oil pressure chamber on both sides in the axial direction of the shaft, wherein the sealing arrangement (1) comprises a sealing ring support (10) which can be fastened to the shaft or the holder in a rotationally fixed and fluid-tight manner and which can be arranged coaxially with respect to the shaft (60) or holder (80), and comprises a mating body (20) which can be fitted to the other component of the shaft (60) and holder (80) in a fluid-tight manner and is surrounded laterally in the axial direction of the shaft by the sealing ring support, wherein two sealing rings (40) which are axially spaced apart from each other are arranged between the sealing ring support (10) and the mating body (20), wherein the sealing rings respectively comprise sealing surfaces with which they rest in a sealing manner on the sealing ring support (10) and the mating body (20) in order to seal off the oil pressure chamber (4) in the axial direction of the shaft, and the two sealing rings are arranged in such a way that at least the radially inner side of the surface of the sealing rings which cannot be placed against the mating body or the sealing ring support is force-actuated in the installation position by the fluid, wherein the sealing surface of each of the sealing rings which interacts with the mating body is arranged at an angle in relation to the sealing surface of the sealing ring which interacts with the sealing ring support, and the sealing rings are twistable against the sealing ring support and/or the mating body, **characterized in that** the two sealing rings (40) are respectively provided with a slit (48) severing the circumference of said rings, and the mating body (20) is provided with a mounting slit (28d) severing the circumference of said body.

2. A sealing arrangement according to claim 1, **characterized in that** the sealing ring support (10) is fastened by press fit in a torsion-proof manner to the shaft (60) or in the holder (80), and/or the mating body (20) is fastened by press fit in the holder (80) or to the shaft (60).

3. A sealing arrangement according to one of the claims 1 or 2, **characterized in that** the sealing ring support (10) and/or the mating body (20) can be fastened by axial sliding onto the shaft (60) or axial insertion into the holder (80) on the respective component of shaft and holder.

4. A sealing arrangement according to one of the claims 1 to 3, **characterized in that** the two sealing surfaces (41, 42) of the respective sealing ring on the sealing ring support and the mating body enclose an angle of 30° to 60° with respect to each other.

5. A sealing arrangement according to one of the claims 1 to 4, **characterized in that** the two sealing rings (40) are respectively provided with a triangular cross-section, and the greatest cross-sectional side thereof rests in a sealing manner on the mating body (20) and the cross-sectional side arranged on the exterior side on the sealing ring (40) rests in a sealing manner on the sealing ring support (10).

6. A sealing arrangement according to one of the claims 1 to 5, **characterized in that** the sealing ring (40) and the sealing surfaces (13, 23) of the sealing ring support (10) and the mating body (20) which rest opposite of the sealing ring (40) are arranged in such a way that the sealing ring (40), when the shaft (60) rotates, has a lower relative rotational speed in relation to the mating body (20) than in relation to the sealing ring support, or at least substantially does not rotate in relation to the mating body.

7. A sealing arrangement according to one of the claims 1 to 6, **characterized in that** the sealing ring support (10) and the mating body (20) are arranged so as to engage into each other, and the sealing ring support (10) engaging around the mating body (20) is arranged as a cylinder with flanks (12) that are flanged to the inside, wherein the inner sides of the flanks provide sealing surfaces (13) against the sealing ring (40).

8. A sealing arrangement according to one of the claims 1 to 7, **characterized in that** the mating body (20) comprises two opposite flanks (24) and a connecting region (25), the free face ends (24a) of the flanks (24) are arranged as contact surfaces against the holder (80) or shaft (60), and the transitional region (28) of flanks to the middle region (25) of the mating body are arranged on the outside as a sealing surface (23) against the sealing ring.

9. A sealing arrangement according to one of the claims 1 to 8, **characterized in that** the mating body (20) has a substantially U-shaped cross-section.

10. A sealing arrangement according to one of the claims 1 to 9, **characterized in that** the sides of the mating body (20) facing the sealing ring support (10) have a region (29) protruding laterally towards the sealing ring support (10).

11. A sealing arrangement according to one of the claims 1 to 10, **characterized in that** a wedge-shaped intermediate space which expands towards the oil pressure chamber is formed between the mating body (20) and the sealing ring support (10), into which the sealing rings (40) with wedge-shaped or triangular cross-section are inserted, wherein the sealing rings (40) are radially compressible and/or expandable.

12. A sealing arrangement according to one of the claims 1 to 11, **characterized in that** the mating body (20) consists of a plastic material and/or the sealing ring support (10) of a metallic material.

13. A sealing arrangement according to one of the claims 1 to 12, **characterized in that** the sealing ring support (10) is arranged continuously in the circumferential direction.

14. A sealing arrangement according to one of the claims 1 to 13, **characterized in that** the holder (80) and/or the shaft (60) consist of aluminium or another light metal, whose fastening surfaces interacting with the sealing ring support (10) and/or the mating body are not surface-coated.

15. An apparatus or machine, comprising a rotatable shaft (60) arranged in a holder and a sealing arrangement according to one of the claims 1 to 14 arranged on the shaft (60) and the holder (80).

## Revendications

1. Dispositif d'étanchéité (1) pour l'étanchéité d'une chambre sous pression d'huile entre un arbre rotatif (60) et un logement d'arbre (80), lequel dispositif d'étanchéité forme un passage d'huile radial pour relier un canal acheminant l'huile (61) de l'arbre et/ou du logement, de façon perméable aux fluides, avec la chambre sous pression d'huile (4), le dispositif d'étanchéité (10, 20, 40) assurant l'étanchéité de la chambre sous pression d'huile des deux côtés dans le sens axial de l'arbre, le dispositif d'étanchéité (1) comprenant un support de joint d'étanchéité (10) pouvant être fixé de façon solidaire en rotation et étanche aux fluides à l'arbre ou au logement, qui peut être disposé de façon coaxiale de l'arbre (60) ou du logement (80), et un élément d'ajustement (20) qui peut être posé de façon étanche aux fluides sur l'autre pièce parmi l'arbre (60) et le logement (80) et qui est entouré par le support de joint d'étanchéité latéralement dans le sens axial de l'arbre, deux joints d'étanchéité (40) distants l'un de l'autre dans le sens axial étant disposés entre le support de joint d'étanchéité (10) et l'élément d'ajustement (20),
les joints d'étanchéité présentant chacun des surfaces d'étanchéité avec lesquelles ils reposent de façon étanche contre le support de joint d'étanchéité (10) et l'élément d'ajustement (20) pour rendre la chambre sous pression d'huile (4) étanche dans le sens axial de l'arbre,
les deux joints d'étanchéité étant conformés de telle manière qu'au moins la face intérieure dans le sens radial de la surface du joint d'étanchéité qui ne peut pas être appliquée sur l'élément d'ajustement ou le support de joint d'étanchéité soit exposée à la force du fluide dans la position de montage, la surface d'étanchéité de chacun des joints d'étanchéité qui interagit avec l'élément d'ajustement étant disposée selon un angle par rapport à la surface d'étanchéité du joint d'étanchéité qui interagit avec le support de joint d'étanchéité,
et les joints d'étanchéité étant capables de pivoter par rapport au support de joint d'étanchéité et/ou à l'élément d'ajustement,
**caractérisé en ce que** les deux joints d'étanchéité (40) sont munis chacun d'une fente (48) coupant sa circonférence, et **en ce que** l'élément d'ajustement (20) est muni d'une fente de montage (28d) coupant sa circonférence.

2. Dispositif d'étanchéité selon la revendication 1, **caractérisé en ce que** le support de joint d'étanchéité (10) est fixé par calage de façon solidaire en rotation sur l'arbre (60) ou dans le logement (80) et/ou **en ce que** l'élément d'ajustement (20) est fixé par calage dans le logement (80) ou sur l'arbre (60).

3. Dispositif d'étanchéité selon l'une des revendications 1 ou 2, **caractérisé en ce que** le support de joint d'étanchéité (10) et/ou l'élément d'ajustement (20) sont fixés par emmanchement axial sur l'arbre (60) ou insertion axiale dans le logement (80) sur l'élément d'arbre ou de logement correspondant.

4. Dispositif d'étanchéité selon l'une des revendications 1 à 3, **caractérisé en ce que** les deux surfaces d'étanchéité (41, 42) respectives des joints d'étanchéité sur le support de joint d'étanchéité et l'élément d'ajustement forment l'une par rapport à l'autre un angle de 30° à 60°.

5. Dispositif d'étanchéité selon l'une des revendications 1 à 4, **caractérisé en ce que** les deux joints d'étanchéité (40) ont chacun une section triangulaire et **en ce que** leur plus grand côté de section repose de façon étanche sur l'élément d'ajustement (20) et le côté de section disposé sur l'extérieur du joint d'étanchéité (40) repose de façon étanche sur le support de joint d'étanchéité (10).

6. Dispositif d'étanchéité selon l'une des revendications 1 à 5, **caractérisé en ce que** le joint d'étanchéité (40) et les surfaces d'étanchéité (13, 23) du support de joint d'étanchéité (10) et de l'élément d'ajustement (20) reposant face au joint d'étanchéité (40) sont conformés de telle manière que le joint d'étanchéité (40) présente, lorsque l'arbre (60) est en rotation, une plus petite vitesse de rotation relative par rapport à l'élément d'ajustement (20) que par rapport au support de joint de rotation, ou ne tourne au moins sensiblement pas par rapport à l'élément d'ajustement.

7. Dispositif d'étanchéité selon l'une des revendications 1 à 6, **caractérisé en ce que** le support de joint d'étanchéité (10) et l'élément d'ajustement (20) sont disposés en prise l'un dans l'autre et **en ce que** le support de joint d'étanchéité (10) entourant l'élément d'ajustement (20) est conformé comme un cylindre à flancs retournés (12), les côtés intérieurs des flancs fournissant des surfaces d'étanchéité (13) vis-à-vis du joint d'étanchéité (40).

8. Dispositif d'étanchéité selon l'une des revendications 1 à 7, **caractérisé en ce que** l'élément d'ajustement (20) présente deux flancs opposés (24) et une zone de liaison (25), **en ce que** les faces d'extrémité libres (24a) des flancs (24) sont conformées comme des surfaces d'appui vis-à-vis du logement (80) ou de l'arbre (60) et **en ce que** la zone de transition (28) des flancs avec la zone médiane (25) de l'élément d'ajustement est conformée sur l'extérieur comme une surface d'étanchéité (23) vis-à-vis du joint d'étanchéité.

9. Dispositif d'étanchéité selon l'une des revendications 1 à 8, **caractérisé en ce que** l'élément d'ajustement (20) présente une section sensiblement en forme de U.

10. Dispositif d'étanchéité selon l'une des revendications 1 à 9, **caractérisé en ce que** les côtés de l'élément d'ajustement (20) tournés vers le support de joint d'étanchéité (10) présentent une zone (29) formant un collet sur le côté vers le support de joint d'étanchéité (10).

11. Dispositif d'étanchéité selon l'une des revendications 1 à 10, **caractérisé en ce qu'**il est prévu formé entre l'élément d'ajustement (20) et le support de joint d'étanchéité (10) un espace intermédiaire en forme de coin s'élargissant en direction de la chambre sous pression d'huile, dans lequel les joints d'étanchéité (40) de section cunéiforme ou triangulaire sont introduits, les joints d'étanchéité (40) étant compressibles et/ou expansibles dans le sens radial.

12. Dispositif d'étanchéité selon l'une des revendications 1 à 11, **caractérisé en ce que** l'élément d'ajustement (20) se compose d'un matériau synthétique et/ou le support de joint d'étanchéité (10) se compose d'un matériau métallique.

13. Dispositif d'étanchéité selon l'une des revendications 1 à 12, **caractérisé en ce que** le support de joint d'étanchéité (10) est conçu de façon continue dans le sens de la circonférence.

14. Dispositif d'étanchéité selon l'une des revendications 1 à 13, **caractérisé en ce que** le logement (80) et/ou l'arbre (60) se composent d'aluminium ou d'un autre métal léger, dont les surfaces de fixation interagissant avec le support de joint d'étanchéité (10) et/ou l'élément d'ajustement ne sont pas durcies par précipitation en surface.

15. Dispositif ou machine avec un arbre (60) capable de rotation dans un logement et avec un dispositif d'étanchéité selon l'une des revendications 1 à 14 disposé sur l'arbre (60) et le logement (80).
